Europäisches Patentamt

European Patent Office

Office européen des brevets

(19)

(11) Numéro de publication: **0 275 736**
**B1**

(12) **FASCICULE DE BREVET EUROPEEN**

(45) Date de publication du fascicule du brevet:
03.10.90

(21) Numéro de dépôt: 87402800.4

(22) Date de dépôt: 10.12.87

(51) Int. Cl.⁵: **F02M 37/06,** F04B 43/02,
B29C 65/44

(54) Pompe à membrane pour l'alimentation en carburant d'un moteur thermique et son procédé de fabrication.

(30) Priorité: 16.12.86 FR 8617554
13.11.87 FR 8715676

(43) Date de publication de la demande:
27.07.88 Bulletin 88/30

(45) Mention de la délivrance du brevet:
03.10.90 Bulletin 90/40

(84) Etats contractants désignés:
DE ES GB IT

(56) Documents cités:
DE-A- 1 679 908
FR-A- 2 029 348
FR-A- 2 553 472
FR-A- 2 557 639

(73) Titulaire: Hunsinger, Emile, 149, rue Perronet,
F-92202 Neuilly sur Seine(FR)

(72) Inventeur: Hunsinger, Emile, 149, rue Perronet,
F-92202 Neuilly sur Seine(FR)

(74) Mandataire: Ohayon, Joseph et al, CABINET BROT ET
JOLLY 83, rue d' Amsterdam, F-75008 Paris(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une pompe du type à membrane servant à alimenter en carburant le carburateur d'un moteur thermique, par exemple de voiture automobile.

Elle concerne plus particulièrement la réalisation des tubulures d'aspiration, de refoulement et de retour au réservoir de carburant.

Par les brevets FR-A 2 557 639 et FR-A 2 553 472 on connaît une pompe à membrane selon le préambule de la revendication 1.

Pour qu'une telle pompe puisse être montée sur n'importe quel modèle de voiture, et que les tubulures se trouvent correctement orientées par rapport aux différents éléments du moteur, il est prévu dans le brevet susmentionné de réaliser les tubulures d'admission, de refoulement et de retour au réservoir sous forme de pièces indépendantes en matière composite synthétique que l'on fixe ensuite dans l'orientation voulue, sur les orifices correspondants du corps supérieur. Etat donné que les tubulures sont dans la même matière que le corps supérieur, on peut les fixer sur les orifices par soudure par ultrasons ou rotation.

Cette pompe présente de nombreux avantages car la matière synthétique dans laquelle sont réalisés les corps supérieur et inférieur est beaucoup plus légère et moins coûteuse que l'aluminium ou les alliages utilisés jusqu'à présent. De plus et surtout, en raison de sa mauvaise conductivité thermique, cette matière retarde notablement la vaporisation de l'essence. Enfin, l'utilisation d'une collerette de sertissage permet de gagner un temps considérable lors du montage de la pompe, et d'obtenir une liaison élastique permanente entre les deux corps, en assurant ainsi un bon écrasement du bord de la membrane et donc une bonne étanchéité.

Dans cette pompe toutefois, étant donné que les tubulures sont en matière composite synthétique et sont soudées sur les orifices correspondants, elles présentent une certaine fragilité. Même si elles sont exemptes de tout défaut de fabrication, il peut arriver qu'elles se brisent ou, plus grave encore, qu'elles se fissurent en cas de manipulation maladroite, par exemple lorsqu'on serre trop fermement les conduites sur les tubulures. Si au lieu de changer de pompe, on se contente alors de raccorder la conduite sur le tronçon de tubulure brisée ou fissurée, la conduite peut se détacher ultérieurement sans que l'on s'en aperçoive. Dans le cas de la tubulure de refoulement ou de la tubulure de retour au réservoir, cela est grave car le carburant peut se répandre dans le moteur et de provoquer un incendie.

La présente invention vise à remédier à ces inconvénients en proposant une pompe du type susmentionné, mais dans laquelle les tubulures sont réalisées et fixées sur le corps supérieur d'une façon telle, qu'elles ne puissent s'en désolidariser accidentellement et que leur mode de fixation contribue à supprimer ou à atténuer les chocs thermiques subis par la pompe du fait de son environnement et limite les effets de "vapor-lock" et de percolation néfastes à un démarrage à chaud.

A cet effet, l'invention concerne une pompe à membrane selon la partie caractérisante de la revendication 1.

Dans le cas d'une pompe pourvue d'une tubulure de retour au réservoir, celle-ci est également métallique et comporte de la même façon une embase insérée de façon étanche dans une empreinte en creux du corps supérieur, où elle forme un bossage qui baigne dans le carburant.

Quant à la tubulure d'admission, elle peut être réalisée en métal ou même, comme dans la pompe connue, en matière synthétique. Il n'est pas nécessaire en effet que cette tubulure soit particulièrement résistance, puisque même si elle se brisait ou se fissurait accidentellement, le carburant n'arriverait plus à la pompe: tout risque d'incendie serait de ce fait écarté.

Les bossages servant de logement à l'embase des tubulures métalliques peuvent faire saillie à l'intérieur du corps supérieur à partir de sa face supérieure ou de sa paroi latérale cylindrique. Dans la pratique, afin de pouvoir disposer d'une pompe polyvalente adaptable à divers types de véhicule, le corps supérieur comprendra une pluralité d'empreintes en creux faisant saillie à l'intérieur dudit corps par rapport à la paroi supérieure et aux parois latérales, ces empreintes étant décalées régulièrement les unes par rapport aux autres, seules celles associées aux embases des tubulures communiquant avec l'intérieur dudit corps.

De façon particulière, les bossages en saillie à l'intérieur du corps supérieur de la pompe, du fait de leur immersion dans le carburant, contribuent à l'homogénéité thermique de la pompe et évitent à celle-ci d'être soumise à des chocs thermiques dus à son environnement. En outre, ils provoquent une recirculation du carburant et il en résulte une diminution notable du phénomène de percolation. Il suffira donc de prévoir, de façon connue en soi, un trou calibré formant gicleur et agissant comme by-pass entre la chambre de refoulement et la chambre d'admission pour éviter les phénomènes de bouchons de vapeur dits "vaporlock" préjudiciables à un démarrage à chaud.

L'invention concerne également un procédé d'ancrage mécanothermique des embases des tubulures métalliques dans les empreintes en creux du corps supérieur, selon la revendication 8.

Au cours de l'insertion de l'embase dans l'empreinte, la matière composite synthétique en fusion vient remplir la première gorge, puis la seconde gorge, s'incruste ensuite dans les alvéoles du moletage, et enfin flue à l'intérieur de la dépouille, jusqu'à arriver en contact intime avec la collerette. La dépouille comprend un chanfrein d'entrée qui permet un écoulement équilibré de la matière composite synthétique à l'intérieur de la dépouille. La matière se trouve alors prisonnière derrière la collerette de l'embase. On obtient ainsi une étanchéité absolue de l'assemblage, ainsi qu'une parfaite tenue en rotation et en extraction des tubulures, garantie au vieillissement.

Naturellement, les diverses empreintes prévues sur un même corps supérieur en vue de son adaptation à divers types de moteurs, ne communiquent pas toutes avec ledit corps, seules celles dans lesquelles ont été insérées les embases des tubulures étant ensuite percées afin d'assurer la communication avec l'intérieur du corps.

Le brevet DE-A 1 679 908 décrit un procédé pour assembler un manche métallique à un corps de brosse en matière composite synthétique. L'extrémité du manche est pourvue à cet effet de plusieurs trous, de manière que lorsque ladite extrémité est chauffée à une température supérieure à la température de fusion de la matière synthétique et est introduite dans une cavité formée dans le corps de brosse, la matière synthétique en fusion vient remplir les trous du manche.

Bien que ce procédé semble être à première vue analogue à celui selon l'invention, il s'en distingue en réalité profondément, étant donné que dans le brevet DE-A1 679 908 on cherche seulement à assurer un assemblage résistant à la traction. Il importe peu en effet que l'assemblage soit étanche ou ait une tenue en rotation. Il n'en va pas de même pour l'assemblage selon l'invention dans lequel on doit assurer une tenue à la traction des tubulures de 400 kg minimum, une tenue à la rotation d'au moins 1, 6 m. kg et une étanchéité absolue vis-à-vis d'une pression intérieure supérieure à $5.10^5$ Pa. Ces performances sont remplies grâce à la forme et aux dimensions très précises des gorges pour assurer la tenue à la traction, du moletage pour s'opposer à la rotation de la tubulure et de la dépouille avec chanfrein d'entrée pour garantir l'étanchéité de l'assemblage. Ces formes et dimensions ne sont pas approximatives, mais ont été découvertes après de très longs travaux de recherche.

Divers modes de réalisation de l'invention vont être décrits ci-après, à titre d'exemples non limitatifs, en référence aux dessins annexés, sur lesquels:

La figure 1 est une coupe axiale d'une pompe à membrane verticale conforme à l'invention;

La figure 2 est une coupe axiale d'une variante du corps supérieur;

La figure 3 est une coupe de détail à plus grande échelle illustrant l'insertion d'une embase de tubulure dans son logement;

Les figures 4 et 5 sont des vues de détail à plus grande échelle illustrant l'assemblage par bague de liaison et compression du corps supérieur et du corps inférieur de la pompe;

La figure 6 est une vue avec coupe axiale partielle d'une pompe latérale conforme à l'invention;

La figure 7 est une vue de dessus de cette pompe;

La figure 8 est une coupe axiale d'une variante du corps supérieur de cette pompe;

Les figures 9 et 10 sont des vues analogues à celles des figures 6 et 8 de variantes de ces pompes sans clapet d'arrêt d'alimentation et sans by-pass; et

La figure 11 est une vue en élévation, partiellement en coupe, d'une pompe à membrane avec tubulure de retour au réservoir.

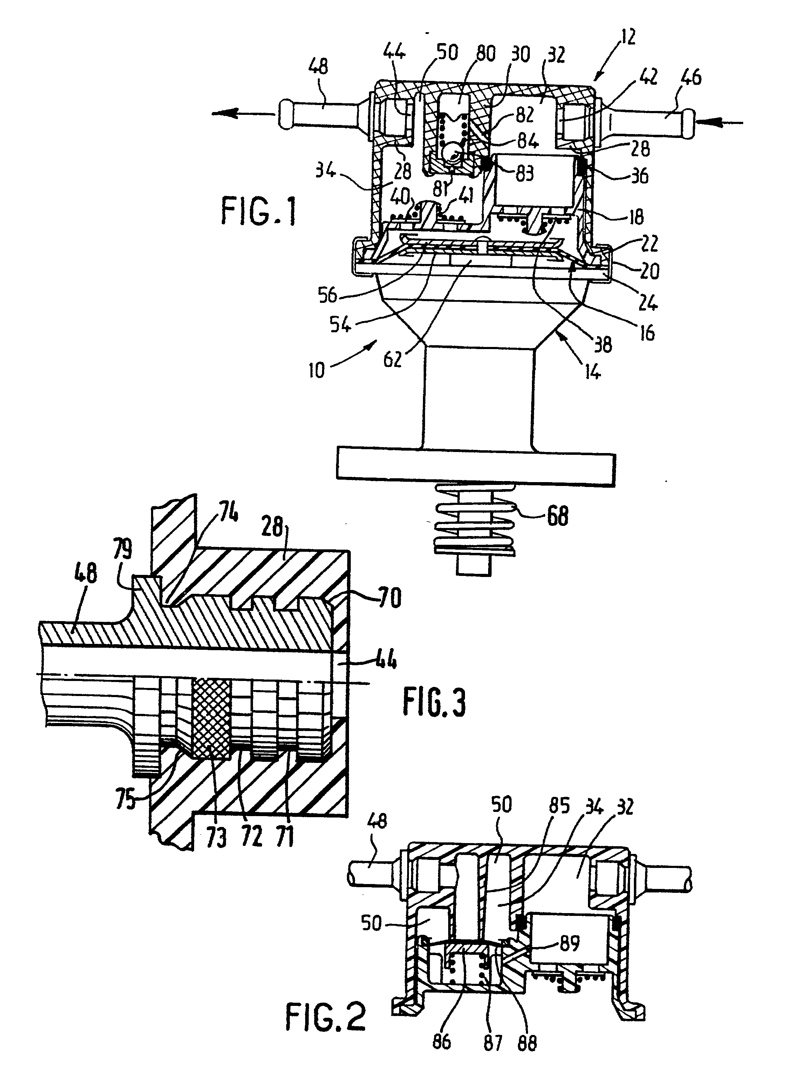

On se référera tout d'abord à la pompe illustrée par les figures 1 à 5.

La pompe 10 représentée sur la figure 1 comprend essentiellement un corps supérieur 12 et un corps inférieur 14, tous deux réalisés en une matière composite synthétique de bonne résistance mécanique et ayant une bonne tenue aux températures relativement élevées qui règnent sous le capot des voitures.

Les corps 12 et 14 sont constitués par des récipients sensiblement cylindriques, ouverts à une extrémité et dont les bords libres respectifs sont appliqués l'un sur l'autre en écrasant entre eux le bord périphérique d'une membrane déformable 16, par exemple en caoutchouc, et le bord périphérique d'un porte-clapets 18 rigide. A cet effet, les deux corps sont solidarisés au moyen d'une collerette annulaire 20 en tôle élastique, qui est sertie sur des brides annulaires 22, 24, formées respectivement sur lesdits bords des corps.

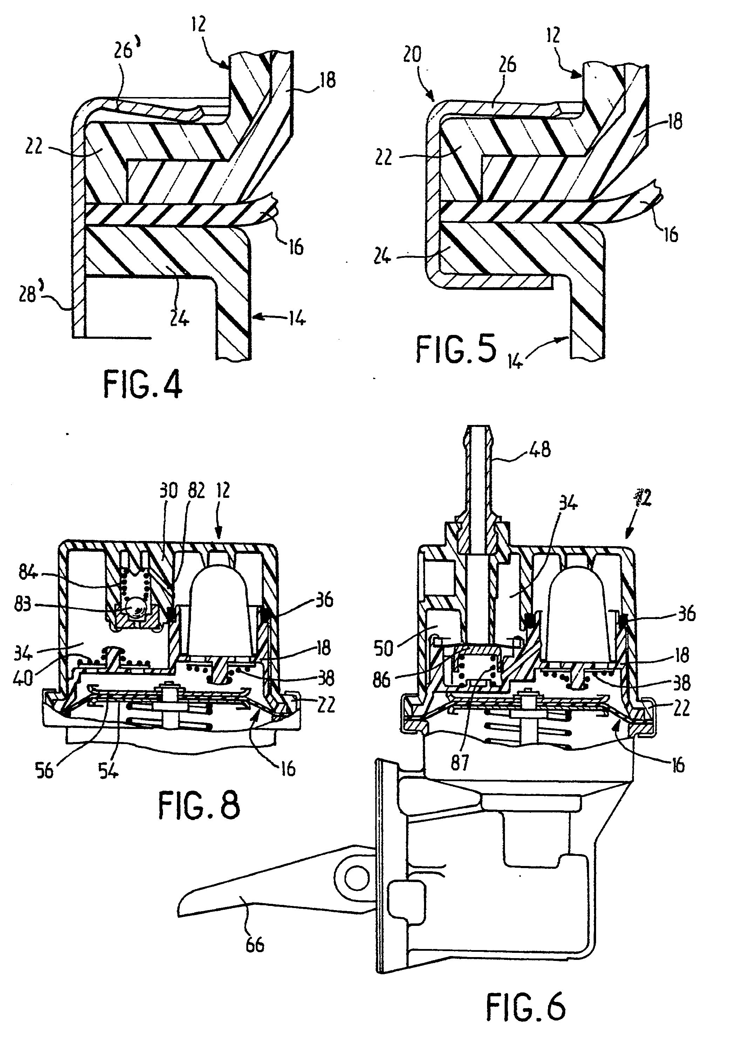

Comme le montre la figure 4, la collerette a initialement une section à deux branches, dont la branche supérieure 26, qui est destinée à s'appliquer contre l'épaulement horizontal de la bride 22 du corps supérieur, est inclinée intérieurement par rapport à l'horizontale. Lors du sertissage, qui amène l'extrémité libre de l'autre branche 28 de la collerette contre l'épaulement horizontal de la bride 24 du corps inférieur, la branche 26 se déforme élastiquement pour s'appliquer sur l'épaulement correspondant en exerçant sur les brides 22, 24 et donc sur les bords de la membrane 16 et du porte-clapet 18 un serrage élastique qui garantit une parfaite étanchéité entre les deux corps.

Le corps supérieur 12 est divisé intérieurement, par une cloison sensiblement cylindrique 30 se raccordant tangentiellement à la paroi du corps 12, en une chambre d'aspiration 32 intérieure à ladite cloison et en une chambre de refoulement 34 extérieure à ladite cloison. La chambre de refoulement comporte intérieurement des cloisons partielles, qui, disposées d'une manière appropriée, permettent d'isoler des volumes qui jouent le rôle d'amortisseurs favorisant les débits.

Le porte-clapets 18 comprend une portion qui s'adapte dans l'ouverture de la chambre d'aspiration 32, un joint 36 assurant l'étanchéité. Ladite portion de porte-clapets ainsi que la portion restante qui se trouve en regard de la chambre de refoulement sont pourvues respectivement d'orifices, obturés de façon connue en soi, par des clapets 38, 40 sollicités par des ressorts tels que 41.

Le corps supérieur 12 présente, sur sa paroi latérale, deux orifices 42 et 44, qui débouchent respectivement dans la chambre d'aspiration 32 et dans la chambre de refoulement 34.

Conformément à l'invention, ces orifices 42 et 44 sont ménagés dans des empreintes en creux 28 du corps supérieur 12, faisant saillie à la manière de bossages à l'intérieur du corps et servant de logements respectivement à l'embase d'une tubulure d'aspiration 46 et à l'embase d'une tubulure de refoulement 48, toutes deux en métal.

La figure 3 représente l'embase de la tubulure de refoulement 48, étant entendu que la tubulure d'admission a exactement la même structure.

Sur le bord d'entrée de l'embase est formé un chanfrein 70 destiné à faciliter la pénétration de la tubulure dans la matière en fusion de l'empreinte 28. L'embase comporte ensuite successivement sur sa paroi latérale, deux gorges circulaires espacées 71, 72, suivies d'une zone annulaire moletée 73, d'une dépouille 74 ayant un bord d'entrée 75 chanfreiné et d'une collerette 79 de diamètre supérieur à celui de l'embase.

Le moletage peut être constitué par des nervures ou des stries croisées qui déterminent entre elles des alvéoles en creux ou en relief.

Comme expliqué ci-dessus, l'insertion des embases des tubulures 46, 48 dans leur logement et leur solidarisation au corps supérieur s'effectuent en les portant à une température suffisante pour provoquer le ramollissement et, de préférence, la mise en solution de la matière composite synthétique dont est constitué le corps supérieur et en les introduisant ensuite dans leur logement 28. La matière composite synthétique fond à leur contact, flue et vient remplir tout d'abord les gorges 71 et 72, puis elle s'incruste dans les alvéoles du moletage 73 et s'écoule enfin dans la dépouille 74 qu'elle emplit uniformément jusqu'à venir en contact intime avec la face inférieure de la collerette. Il en résulte, après solidification de la matière composite synthétique, une solidarisation étanche en rotation et en traction des tubulures 46, 48 et du corps supérieur 12.

Il va de soi que l'embase peut comporter une seule gorge ou un nombre de gorges supérieur à deux, ou encore plusieurs zones moletées.

Pour pouvoir orienter parfaitement les tubulures d'aspiration et de refoulement suivant les impératifs du moteur considéré, une pluralité d'empreintes 28, décalées les unes par rapport aux autres, sont prévues dans la paroi latérale et/ou le fond (voir figure 6) du corps supérieur 12. Ces empreintes ne communiquent pas à l'origine avec l'intérieur du corps 12. Seules celles équipées des tubulures d'admission et de refoulement sont ensuite percées pour faire communiquer ces tubulures respectivement avec la chambre d'aspiration 32 et la chambre de refoulement 34.

Les bossages formés pour les logements des embases des tubulures baignent dans le carburant à l'intérieur du corps supérieur, formant avec les parties adjacentes en saillie du corps supérieur des puits tels que 50, qui favorisent la recirculation du carburant et l'homogénéité de température de la pompe.

Comme on le voit sur la figure 1, une cavité 80, ménagée à la partie supérieure de la chambre de refoulement 34, communique par un orifice calibré 81 avec cette chambre et par un conduit 82 formant bypass avec la chambre d'aspiration 32. Une bille 83, sollicitée par un ressort 84, obture normalement l'orifice 81. En cas de formation d'un bouchon de vapeur de carburant dans la chambre de refoulement lors de l'arrêt du moteur, la pression soulève la bille 83, dès qu'elle devient supérieure à la force du ressort 84. Le mélange gazeux s'échappe alors à travers le by-pass 82 vers la chambre d'admission et, après régénération par l'arrivée d'essence fraîche, retourne vers la chambre de refoulement 34. Le by-pass assure ainsi le dégazage et arrête la percolation.

En variante (figure 2), la tubulure de refoulement 48 débouche à l'intérieur d'un appendice tubulaire 85 faisant saillie à l'intérieur de la chambre de refoulement 34 et communiquant avec celle-ci. Entre le porte-clapets 18 et l'extrémité ouverte de l'appendice 85 est monté un clapet d'arrêt d'alimentation 86, muni d'une membrane d'étanchéité 88 et d'un ressort de rappel 87 dont la force est insuffisante pour appliquer le clapet contre l'extrémité ouverte de l'appendice. Un conduit formant bypass 89 part de la chambre d'aspiration 32 et débouche sous le clapet d'arrêt 86. Sous l'action conjuguée de la pression du ressort et de la pression communiquée à travers le conduit 89, le clapet d'arrêt 86 obture l'appendice. Ledit clapet d'arrêt rend donc la pompe étanche en cas d'arrêt du moteur alors que le réservoir est en charge, et surtout en cas de retournement du véhicule. Il supprime de ce fait les risques d'incendie.

De façon connue en soi, la portion centrale de la membrane 16 est enserrée entre un flasque-support 54 et une contre-plaque 56, auxquels elle est solidarisée au moyen d'un rivet. Un poussoir 62, qui s'étend selon l'axe du corps inférieur 14, fait saillie à l'extérieur du corps inférieur à travers un orifice formé dans le fond de ce dernier, un joint assurant l'étanchéité au niveau de cet orifice.

L'ensemble membrane-flasque et contre-plaque est normalement sollicité vers le haut sur la figure 1 par un ressort de compression s'appuyant sur le flasque 54 et sur le fond du corps inférieur.

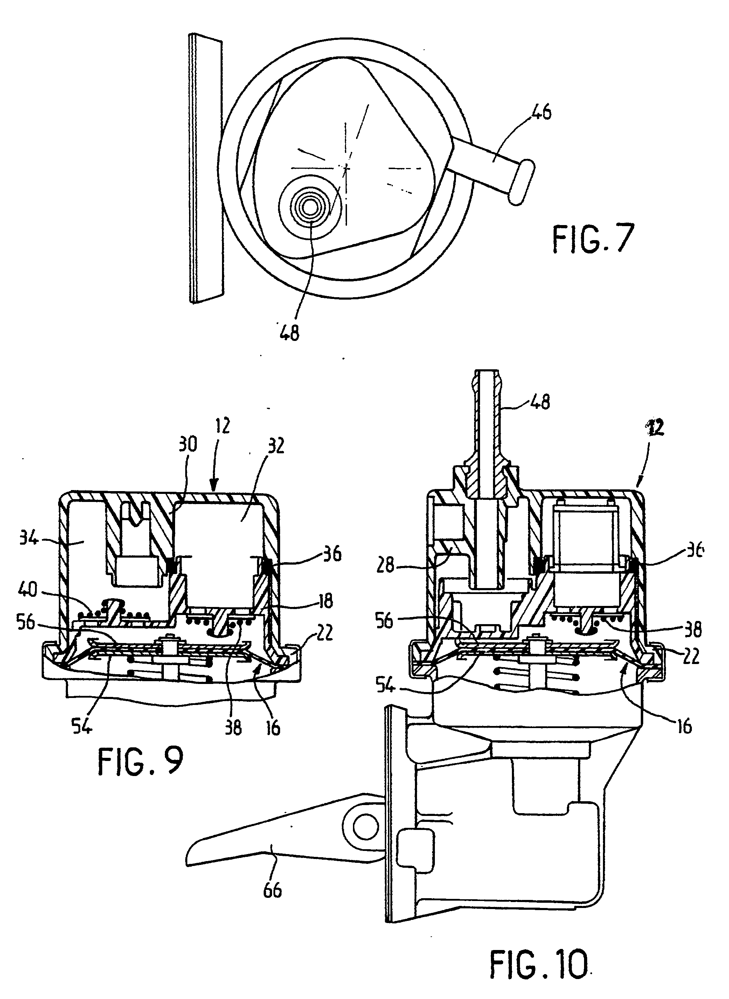

Le poussoir 62 peut être enfoncé à l'intérieur du corps inférieur, à l'encontre de la force d'un ressort 68. De façon connue, le poussoir peut être actionné soit par l'excentrique d'un arbre moteur, soit par un levier basculant 66 (figure 10).

Les figures 6, 7 et 8, sur lesquelles les organes déjà décrits sont désignés par les mêmes chiffres de référence, illustrent la réalisation d'une pompe analogue, utilisable en pompe latérale. On notera que, dans ce cas, la tubulure de refoulement 48 est disposée verticalement.

De même, les figures 9 et 10 illustrent une pompe analogue à celle des figures 6 et 8, sans by-pass et sans clapet d'arrêt d'alimentation.

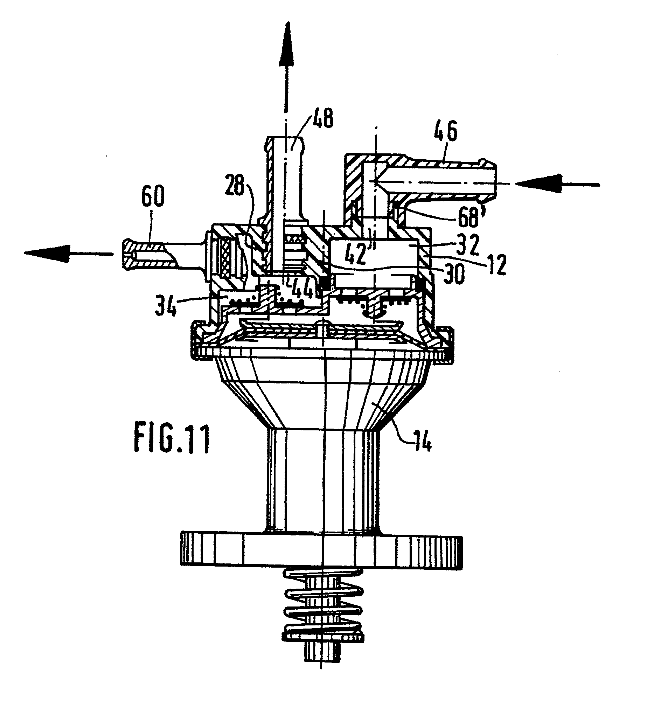

La variante de réalisation de la figure 11 ne comporte pas non plus de by-pass et de clapet d'arret d'alimentation. Le corps supérieur présente, sur sa paroi de fond, deux orifices 42 et 44, qui débouchent respectivement dans la chambre d'aspiration 32 et dans la chambre de refoulement 34 et, sur sa paroi latérale, un orifice de retour au réservoir, non visible sur la figure 11, qui débouche également dans la chambre de refoulement 34.

L'orifice de refoulement 44 et l'orifice de retour au réservoir sont ménagés dans des empreintes en creux 28 du corps supérieur 12 servant de logements respectivement à l'embase d'une tubulure métallique de refoulement 48 et à l'embase d'une tubulure métallique de retour au réservoir 60.

L'orifice d'aspiration 42 n'est pas formé dans une empreinte mais directement dans la paroi de fond du corps supérieur. Il est muni d'un embout tubulaire 68' sur lequel vient s'adapter une tubulure d'aspiration coudée 46 réalisée en une matière composite synthétique, de préférence la même que celle qui constitue le corps supérieur. De façon connue en soi, la tubulure d'aspiration est fixée sur l'embout avec l'orientation désirée, par soudure par ultrasons ou rotation.

## Revendications

1. Pompe à membrane pour l'alimentation en carburant d'un moteur thermique, du type comprenant un corps supérieur (12) en matière composite synthétique de bonne résistarlce mécanique et thermique et un corps inférieur (14) réalisé en matière composite synthétique ou en métal, ces corps étant creux et ouverts à une extrémité, leurs bords libres étant appliqués l'un sur l'autre en pinçant entre eux les bords périphériques d'une membrane déformable (16) et d'un élément porte-clapets (18), le corps supérieur étant divisé intérieurement par une cloison (30) en une chambre d'admission (32) communiquant avec le réservoir de carburant par un orifice d'admission (42) et une chambre de refoulement (34) communiquant avec le carburateur du moteur par un orifice de refoulement (44), et par un orifice de retour au réservoir éventuellement avec le réservoir, lesdits orifices étant munis de tubulures d'aspiration (46), de refoulement (48) et de retour au réservoir (60), les deux corps étant maintenus assemblés au moyen d'une collerette en tôle élastique (20), sertie sur les brides formées sur les bords desdits corps, ladite pompe étant caractérisée en ce qu'au moins la tubulure de refoulement (48) et la tubulure de retour au réservoir (60) sont métalliques et comportent chacune une portion terminale ou embase présentant successivement sur sa paroi latérale un chanfrein (70) sur son bord d'entrée, suivi d'au moins une gorge annulaire (71, 72), d'une zone annulaire (73) pourvue d'un moletage, d'une dépouille annulaire (74) limitée par une collerette (79) de diamètre supérieur à celui de l'embase, ladite embase étant noyée de façon étanche dans une empreinte (28) formée en creux dans la paroi latérale et/ou la paroi de fond du corps supérieur, qui communique avec l'intérieur de celui-ci à travers un orifice (44), et qui forme à l'intérieur du corps supérieur un bossage baignant dans le carburant, l'étanchéité de l'assemblage ainsi que la résistance à la traction et à la rotation des tubulures étant assurées par le fait que la matière composite synthétique de l'empreinte, portée à sa température de ramollissement, remplit les différents reliefs de l'embase.

2. Pompe selon la revendication 1, caractérisée en ce que le moletage (73) est réalisé sous forme de nervures ou de stries croisées qui définissent entre elles des alvéoles dans lesquels vient fluer la matière composite synthétique.

3. Pompe selon la revendication 1, caractérisée en ce que la dépouille comprend un chanfrein d'entrée (75) qui permet un écoulement équilibré de la matière composite synthétique à l'intérieur de la dépouille.

4. Pompe selon la revendication 1, caractérisée en ce que ledit corps supérieur (12) comprend une pluralité d'empreintes en creux (28) dans lesquelles sont noyées les embases desdites tubulures (46, 48, 60), lesdites empreintes formant des bossages en saillie à l'intérieur dudit corps supérieur (12), seules les empreintes dans lesquelles sont logées lesdites embases étant percées d'orifices (44) pour communiquer avec l'intérieur dudit corps.

5. Pompe selon la revendication 1, caractérisée en ce que les empreintes (28) forment avec des parties adjacentes en saillie du corps supérieur, des puits (50) favorisant la recirculation du carburant et évitant les chocs thermiques de la pompe.

6. Pompe selon la revendication 1, caractérisée en ce que le corps supérieur est pourvu d'une cloison définissant une cavité (80) qui communique avec la chambre de refoulement par un orifice calibré (81) normalement obturé par un clapet (83) chargé par un ressort taré (84) et avec la chambre d'aspiration par un conduit (82), de manière qu'en cas de formation d'un bouchon de vapeur de carburant dans la chambre de refoulement, le mélange gazeux s'échappe à travers le trou calibré (81) et le conduit (82) vers la chambre d'admission (32) où il est régénéré par l'arrivée d'essence fraîche.

7. Pompe selon la revendication 1, caractérisé en ce que la tubulure de refoulement (48) débouche à l'intérieur d'un appendice tubulaire (85) faisant saillie à l'intérieur de la chambre de refoulement (34), et en ce qu'entre le porte-clapets (18) et l'extrémité ouverte de l'appendice est monté un clapet d'arrêt d'alimentation (86) muni d'une membrane d'étanchéité (88) et d'un ressort de rappel (87), un conduit (89) percé dans le porte-clapets reliant la chambre définie sous le clapet d'arrêt (86) à la chambre d'admission (32).

8. Procédé d'assemblage des tubulures de refoulement et de retour au réservoir, au corps supérieur de la pompe selon l'une des revendications précédentes, caractérisé en ce qu'il consiste à introduire dans les empreintes les embases préalablement portées à une température permettant le ramollissement de la matière composite synthétique, à maintenir lesdites embases au contact de la matière composite synthétique en exerçant sur elles une pression pendant une durée suffisante pour que ladite matière se ramollisse, fonde et vienne fluer dans les gorges, dans les alvéoles du moletage et dans la dépouille, à refroidir la matière composite synthétique, et finalement à percer le fond des empreintes qui ont reçu des embases, de manière à assurer la communication desdites empreintes avec l'intérieur du corps supérieur.

## Claims

1. A diaphragm pump for the supply of fuel to a heat engine, of the type comprising an upper body (12) of composite synthetic material of good mechanical strength and resistance to heat and a lower body (14) made of composite synthetic material or metal, said bodies being hollow and open at one end, their free edges being fitted together, gripping between them the peripheral edges of a deformable diaphragm (16) and a valve-carrying element (18), the upper body being internally divided by a partition (30) into an inlet chamber (32) communicating with the fuel tank by way of an inlet orifice (42) and a delivery chamber (34) communicating with the carburettor of the engine by way of a delivery orifice (44) and by way of a tank return orifice optionally with the tank, said orifices being provided with tubular intake, delivery and tank return connection portions (46, 48 and 60 respectively), the two bodies being held in the assembled condition by means of a resilient sheet metal collar (20) which is cripmed over the flanges formed by the edges of said bodies, said pump being characterised in that at least the tubular tank return connection portion (60) are metal and each comprise a terminal portion or base portion successively provided on its side wall with a bevel (70) on its entry edge, followed by at least one annular groove (71, 72), an annular zone (73) provided with knurling, an annular relief portion (74) delimited by a collar (79) of a diameter which is larger than that of the base portion, said base portion being sealingly embedded in an impression portion (28) formed in a hollow configuration in the side wall and/or the end wall of the upper body, which communicates with the interior of the latter through an orifice (44) and which forms in the interior of the upper body a boss which is immersed in the fuel, the sealed nature of the assembly and tensile strength and resistance to rotation of the tubular connection portions being ensured by the composite synthetic material of the impression portion, when raised to its softening temperature, filling the different relief regions of the base portion.

2. A pump according to claim 1 characterised in that the knurling (73) is in the form of crossed ribs or ridges which define between them cavities into which the composite synthetic material creeps.

3. A pump according to claim 1 characterised in that the relief portion comprises an entry bevel (75) which permits balanced flow of the composite synthetic material within the relief portion.

4. A pump according to claim 1 characterised in that said upper body (12) comprises a plurality of impression portions (28) of hollow configuration in which the base portions of said tubular connection portions (46, 48, 60) are embedded, said impression portios forming bosses projecting into the interior of said upper body (12), only the impression portions in which said base portions are accommodated being pierced with orifices (44) for communication with the interior of said body.

5. A pump according to claim 1 characterised in that the impression portions (28), with adjacent projecting portions of the upper body, form wells for promoting recirculation of the fuel and avoiding thermal shocks for the pump.

6. A pump according to claim 1 characterised in that the upper body is provided with a partition defining a cavity (80) which communicates with the delivery chamber by way of a calibrated orifice (81) which is normally closed by a valve member (83) loaded by a calibrated spring (84) and with the intake chamber by way of a conduit (82) in such a way that in the event of a fuel vapour blockage in the delivery chamber, the gaseous mixture escapes through the calibrated hole (81) and the conduit (82) to the inlet chamber (32) where it is regenerated by the arrival of fresh petrol.

7. A pump according to claim 1 characterised in that the tubular delivery connection portion (48) opens within a tubular appendix portion (85) projecting in the interior of the delivery chamber (34) and that mounted between the valve carrier (18) and the open end of the appendix portion is a fuel feed stop valve (86) provided with a sealing diaphragm (88) and a return spring (87), a conduit (89) provided in the valve carrier connecting the chamber defined under the stop valve (86) to the inlet ch amber (32).

8. A process for assembly of the tubular delivery and tank return connection portions to the upper body of the pump according to one of the preceding claims characterised in that it comprises introducing into the impression portions the base portions which habe been previously raised to a temperature permitting softening of the composite synthetic material, keeping said base portions in contact with the composite synthetic material while applying a pressure to said base portions for a period of time sufficient for said material to soften, melt and creep into the grooves, into the cavities of the knurling and into the relief portion, cooling the composite synthetic material and finally piercing the bottom of the impression portions which have received the base portions, so as to provide a communication for said impression portions with the interior of the upper body.

**Patentansprüche**

1. Federplattenpumpe zur Kraftstoffversorgung eines Verbrennungsmotors, mit einem Oberteil (12) aus synthetischem Verbundwerkstoff mit guter Festigkeit und Wärmebeständigkeit, sowie mit einem Unterteil (14) aus synthetischem Verbundwerkstoff oder aus Metall, wobei Ober- und Unterteil hohl und an einem Ende offen sind und ihre freien Kanten unter Klemmung der peripheren Ränder einer verformbaren Membran (16) und eines Ventilträgerteils (18) dazwischen gegeneinander anliegen, wobei das Oberteil innen durch eine Trennwandung (30) in eine mit dem Kraftstoffbehälter über eine Zuführöffnung (42) verbundene Zuführkammer (32) und in eine mit dem Vergaser des Motors über eine Förderöffnung (44) und über eine Rücklauföffnung zur Rückführung zum Behälter gegebenenfalls mit dem Behälter verbundene Förderkammer (34) unterteilt ist, während die beiden Öffnungen mit einer Ansaugleitung (46), einer Förderleitung (48) und einer zum Behälter leitenden Rückführleitung (60) versehen sind und die beiden Teile mit Hilfe eines Bundflansches aus Federblech (20) zusammengehalten sind, der auf den auf den Kanten der Teile ausgebildeten Flanschen eingefalzt ist, dadurch gekennzeichnet, daß zumindest die Förderleitung (48) und die zum Behälter zurückleitende Rückführleitung (60) aus Metall bestehen und jeweils einen End- bzw. Sockelabschnitt aufweisen, der hintereinander auf der Seitenwandung an der Eintrittskante eine Abfasung (70) und anschließend mindestens eine ringförmige Auskehlung (71, 72), einen Ringbereich (73) mit einer Rändelung und eine ringförmige Formschräge (74) aufweist, die von einem Ringflansch (79) begrenzt ist, dessen Durchmesser größer als der Durchmesser des Sockels ist, wobei der Sockel unter Abdichtung in eine in die Seitenwandung und/oder Bodenwandung des Oberteils eingeschnittene Vertiefung (28) eingelassen ist, die mit dessen Innenraum über eine Öffnung (44) in Verbindung steht und im Inneren des Oberteils eine vom Kraftstoff umspülte Erhebung bildet, wobei die Abdichtung der gesamten Baugruppe sowie die Zug- und Drehfestigkeit der Leitungen dadurch gewährleistet sind, daß der synthetische Verbundwerkstoff der Vertiefung nach Erwärmung auf seine Plastifizierungstemperatur die verschiedenen Vertiefungen und Erhebungen des Sockels ausfüllt.

2. Pumpe nach Anspruch 1, dadurch gekennzeichnet, daß die Rändelung (73) in Form von überkreuzten Rippen bzw. Rillen ausgeführt ist, die zwischen sich Hohlräume begrenzen, in die der synthetische Verbundwerkstoff fließt.

3. Pumpe nach Anspruch 1, dadurch gekennzeichnet, daß die Formschräge eine Einlaßabfasung (75) aufweist, die ein ausgeglichenes Ausfließen des synthetischen Verbundwerkstoffe in das Innere der Formschräge ermöglicht.

4. Pumpe nach Anspruch 1, dadurch gekennzeichnet, daß das Oberteil (12) eine Vielzahl von eingelassenen Vertiefungen (28) aufweist, in welche die Sockelabschnitt der Leitungen (46, 48, 60) eingesenkt sind und die innen im Oberteil (12) vorstehende Erhebungen bilden, wobei nur in den Vertiefungen, in denen die Sockel eingesetzt sind, Öffnungen (44) zur Verbindung mit dem Innenraum des Teils eingebohrt sind.

5. Pumpe nach Anspruch 1, dadurch gekennzeichnet, daß die Vertiefungen (28) zusammen mit den vorstehenden benachbarten Abschnitten des Oberteils Trichter (50) bilden, die die Rückführung von Kraftstoff begünstigen und zur Vermeidung schroffer Temperaturwechsel der Pumpe beitragen.

6. Pumpe nach Anspruch 1, dadurch gekennzeichnet, daß das Oberteil eine Trennwandung zur Abgrenzung eines Hohlraums (80) aufweist, der mit der Förderkammer über eine kalibrierte Öffnung (81), die im Normalzustand durch ein mit einer geeichten Feder (84) beaufschlagtes Sperrventil (83) verschlossen ist, und mit der Ansaugkammer über eine Leitung (82) so in Verbindung steht, daß bei Bildung von Kraftstoffdampfblasen in der Förderkammer das Gasgemisch über die kalibrierte Öffnung (81) und die Leitung (82) in die Zuführkammer (32) entweicht, wo es durch den einströmenden frischen Kraftstoff wieder ergänzt wird.

7. Pumpe nach Anspruch 1, dadurch gekennzeichnet, daß die Förderleitung (48) im Inneren eines rohrförmigen Ansatzes (85) mündet, welcher in den Innenraum der Förderkammer (34) hineinragt, und daß zwischen dem Ventilträger (18) und dem offenen Ende des Ansatzes ein Sperrventil (86) mit einer Dichtungsmembran (88) und einer Rückstellfeder (87) zur Unterbrechung der Kraftstoffzufuhr angeordnet ist, wobei eine in den Ventilträger eingebohrte Leitung (89) die unter dem Sperrventil (86) abgegrenzte Kammer mit der Zuführkammer (32) verbindet.

8. Verfahren zur Montage von Förder- und Rückführleitungen am Oberteil der Pumpe nach einem vorhergehenden Ansprüche, dadurch gekennzeichnet, daß in die Vertiefungen die zuvor auf eine Temperatur, bei der die Plastifizierung des synthetischen Verbundwerkstoffs eintritt, erwärmten Sockel eingesetzt werden, daß die Sockel dadurch in Berührung mit dem synthetischen Verbundwerkstoff gehalten werden, daß sie ausreichend lange Zeit mit Druck beaufschlagt werden, damit der Werkstoff plastisch weich wird, schmilzt und in die Auskehlungen, in die Hohlräume der Rändelung und in die Abfasung fließt, daß der synthetische Verbundwerkstoff abgekühlt wird, und abschließend in den Boden der Vertiefungen, in die die Sockel eingesetzt wurden, Bohrungen so eingelassen werden, daß die Verbindung zwischen den Vertiefungen und dem Innenraum des Oberteils gewährleistet ist.

EP 0 275 736 B1

FIG.1

FIG.2

FIG.3

FIG.4

FIG.5

FIG.8

FIG.6

EP 0 275 736 B1

FIG.7

FIG.9

FIG.10

FIG.11